# FASCICULE DE BREVET EUROPEEN

(11) **EP 3 654 181 B1**
(45) Date de publication et mention de la délivrance du brevet: **07.08.2024**
(21) Numéro de dépôt: 19208676.7
(22) Date de dépôt: 12.11.2019
(51) Int. Cl.: G06F 9/455, G06F 11/07

(54) **PROCEDE DE MAINTENANCE D'UNE MACHINE VIRTUELLE HEBERGEE SUR UN SERVEUR D'UN ORDINATEUR HOTE**
WARTUNGSVERFAHREN EINER VIRTUELLEN MASCHINE AUF EINEM HOST-COMPUTERSERVER
METHOD FOR MAINTENANCE OF A VIRTUAL MACHINE HOSTED ON A SERVER OF A HOST COMPUTER

(30) Priorité: 16.11.2018 FR 1860638
(43) Date de publication de la demande: 20.05.2020
(73) Titulaire: Shadow, 75002 Paris (FR)
(72) Inventeur: ANGER, William, 94200 IVRY SUR SEINE (FR)
(74) Mandataire: BCF Global

(56) Documents cités:
- FR-A1- 3 047 576
- US-A1- 2012 137 180
- US-A1- 2013 207 812
- US-A1- 2018 210 774

## Description

### DOMAINE DE L'INVENTION

La présente invention concerne, d'une manière générale, un procédé de maintenance d'une machine virtuelle hébergée sur un serveur d'un ordinateur hôte.

La présente invention trouve une application particulière dans une architecture informatique dans laquelle une session informatique d'utilisateur s'exécute sur une machine virtuelle et est diffusée à un client distant avec lequel la session informatique est associée.

### ARRIERE PLAN TECHNOLOGIQUE DE L'INVENTION

Les documents US2017228851 et FR3047576 décrivent une configuration de système informatique, dans lequel des dispositifs d'interface d'utilisateur (affichage, clavier, ...) sont séparés de la partie traitement de l'application. Les dispositifs d'interface utilisateur (également dénommé collectivement comme le "client") se trouvent à proximité de l'utilisateur alors que les composants de traitement et de stockage formant un ordinateur hôte se trouvent dans un lieu d'hébergement distant. Les dispositifs d'interface utilisateur ont généralement accès, au niveau de l'ordinateur hôte, à une machine virtuelle dédiée par l'intermédiaire d'un réseau (le plus souvent Internet), la machine virtuelle émulant le traitement, le stockage et toutes les autres ressources informatiques requises pour que l'utilisateur puisse exploiter une session informatique, comme si celle-ci s'exécutait localement. L'ordinateur hôte héberge le système d'exploitation et les applications logicielles utilisées par les clients, ce qui limite les ressources de traitement du côté client. Le document US2018/210774 divulgue la détermination d'un état d'erreur pour un système d'exploitation sur la base de données d'image. US 2012/137180 enseigne une méthode de détection d'erreur système d'un dispositif informatique en obtenant une image d'une image qui est actuellement affichée sur l'écran d'affichage à partir d'une mémoire vidéo du contrôleur graphique à intervalles réguliers. L'image obtenue est comparée à des images anormales de l'écran d'affichage préenregistrées dans un système de stockage, afin de détecter si le dispositif informatique fonctionne de manière anormale. Le document US 2013/207812 détermine l'état d'erreur d'un dispositif distant en comparant les données d'une image d'affichage transmise par le dispositif distant avec les données d'une image d'erreur provenant d'une base de données.

Il est habituel que l'ordinateur hôte soit constitué d'une pluralité de systèmes informatiques physiques (serveurs), chacun hébergeant une pluralité de machines virtuelles. Chaque machine virtuelle est connectée à un client, et fournit un environnement virtuel dédié pour émuler les fonctions d'un ordinateur personnel physique, y compris le traitement des données graphiques, et fournir les images de session d'utilisateur sur l'écran du client. Ces images de session sont préparées et traitées au moyen d'une carte graphique, pouvant être physique ou virtuelle, qui est attribuée à la machine virtuelle au moment du démarrage de celle-ci. De la même manière, les données de son produites au cours de l'exécution de la session d'utilisateur sont transférées au client. Le client possède des ressources informatiques suffisantes pour recevoir le flux de données et afficher et/ou émettre celles-ci. Le client échange également des informations ou des instructions avec la machine virtuelle, telle que celles générés par les dispositifs d'interface (clavier, souris...). Ces informations sont appelées données de commande. Les images de session étant destinées à être diffusées au client distant, les serveurs sur lesquels s'exécutent les machines virtuelles hébergeant ces sessions ne sont généralement pas reliés à des écrans.

Il peut exister des situations dans lesquelles la machine virtuelle ne démarre pas correctement, et pour lesquelles la carte graphique ne peut être attribuée à la machine virtuelle. Dans ces situations, les images de session ne peuvent être transférées au client distant et ne peuvent alors pas s'afficher sur l'écran du client distant. L'utilisateur ne dispose alors d'aucun moyen pour pouvoir déterminer l'origine du dysfonctionnement, ni le résoudre. En l'absence d'écrans reliés à chaque session d'utilisateur sur le site de l'ordinateur hôte, ces situations de non fonctionnement sont également difficilement détectables par les équipes de maintenance de ce site.

Il est possible d'envisager qu'en cas de dysfonctionnement au démarrage d'une machine virtuelle, un agent de maintenance présent physiquement sur le site de l'ordinateur hôte soit alerté par le client distant ou par l'utilisateur de ce client distant, et procède, depuis l'ordinateur hôte, à la détection et à la résolution de ce dysfonctionnement. Toutefois, cette opération nécessite un temps de réaction de la part de l'agent de maintenance, ce qui est préjudiciable pour le confort de l'utilisateur.

D'une manière plus générale, lorsqu'un dysfonctionnement survient au cours de l'exécution de la session informatique sur la machine virtuelle, il est gênant pour l'utilisateur de devoir alerter un agent de maintenance et attendre sa réaction avant de pouvoir bénéficier à nouveau d'une machine virtuelle fonctionnelle.

La présente invention vise à résoudre au moins en partie ces problèmes, et propose un procédé de maintenance d'une machine virtuelle qui permette à l'ordinateur hôte de détecter, voire même de résoudre certains dysfonctionnements susceptibles de survenir au cours de l'exécution de la machine virtuelle, sans nécessiter d'intervention humaine.

### BREVE DESCRIPTION DE L'INVENTION

En vue de la réalisation de ce but, l'objet de l'invention propose un procédé de maintenance d'une machine virtuelle hébergée sur un serveur d'un ordinateur hôte, le procédé étant implémenté sur l'ordinateur hôte la machine virtuelle comprenant une unité de traitement graphique pour préparer des images de session destinées à s'afficher sur un écran d'un client distant, les images de session étant produites la machine virtuelle, le procédé de maintenance comprenant les étapes suivantes :
- l'obtention d'au moins une image de session capturant des données d'affichage qui sont mémorisées dans une mémoire tampon de l'unité de traitement graphique de la machine virtuelle;
- la comparaison de l'image de session capturée avec au moins une image d'écran représentative d'un état non fonctionnel de la machine virtuelle, la comparaison appliquant des métriques d'images et considérant que deux images correspondent si la distance les séparant est inférieure à un seuil déterminé;
- la détermination de l'état de fonctionnement de la machine virtuelle selon le résultat de l'étape précédente de comparaison.

En procédant à une analyse automatisée d'une image capturée de session, un procédé de maintenance conforme à la présente description permet bien de détecter, voire même de résoudre, même lorsque la machine virtuelle est déconnectée de tout écran d'affichage, certains dysfonctionnements susceptibles de survenir lors du démarrage de la machine virtuelle 3 ou au cours de l'exécution de la session informatique sur cette machine, sans nécessiter d'intervention humaine.

Selon d'autres caractéristiques avantageuses et non limitatives de l'invention, prises seules ou selon toute combinaison technique réalisable :
- l'unité de traitement graphique comprend une carte graphique virtuelle ;
- un état non fonctionnel de la machine virtuelle est un échec de démarrage d'un système d'exploitation de la machine virtuelle ;
- un état non fonctionnel de la machine virtuelle est une mise à jour du système d'exploitation de la machine virtuelle ;
- un état non fonctionnel de la machine virtuelle est un échec de mise à jour du système d'exploitation de la machine virtuelle ;
- l'étape de comparaison consiste à détecter la présence d'au moins un motif caractéristique prédéterminé de l'image d'écran dans l'image de session ;
- les étapes de comparaison et de détermination sont mise en oeuvre par un module de classification configuré par apprentissage automatique ;
- l'étape de détermination comprend également la préparation d'une commande de dépannage de la machine virtuelle ;
- le procédé de maintenance comprend une étape de réparation comprenant l'envoi de la commande de dépannage à la machine virtuelle ;
- la commande de dépannage est un clic de souris sur une zone prédéterminée de l'écran, une chaîne de caractères, une instruction de redémarrage de la machine virtuelle.

L'objet de l'invention propose également un programme d'ordinateur contenant des instructions aptes à la mise en oeuvre des étapes du procédé de maintenance selon l'une des revendications précédentes lorsque le procédé est exécuté sur une machine virtuelle de maintenance ou un serveur de maintenance de l'ordinateur hôte.

### BREVE DESCRIPTION DES DESSINS

D'autres caractéristiques et avantages de l'invention ressortiront de la description détaillée de l'invention qui va suivre en référence aux figures annexées sur lesquelles :
- La figure 1 représente une architecture informatique dans laquelle peut être mise en oeuvre la présente invention ;
- La figure 2 représente les étapes successives d'un mode de réalisation d'un procédé de maintenance conforme à l'invention ;
- Les figures 3a à 3d représentent des copies d'écran correspondant à des images d'écran représentatives d'un état non fonctionnel conformes à l'invention.

### DESCRIPTION DETAILLEE DE L'INVENTION

Dans la description qui suit, des descriptions détaillées de fonctions et d'éléments connus, qui pourraient inutilement rendre obscur l'essentiel de la présente invention, seront omises.

### Architecture informatique

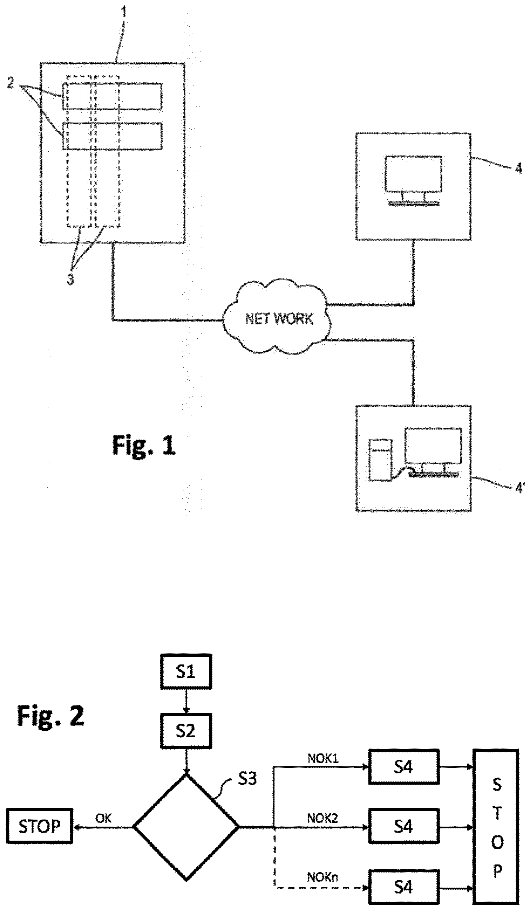

La figure 1 représente une architecture informatique permettant de mettre en oeuvre le procédé de maintenance qui fera l'objet d'une description détaillée dans la suite de cette description.

Cette architecture est formée ici d'un ordinateur hôte 1 qui présente une pluralité de serveurs 2. Les serveurs 2 sont constitués de composants performants (CPU, mémoire, disque de stockage, cartes graphiques et de réseau, ...) de manière à former une plateforme matérielle particulièrement efficace pour exécuter des applications pouvant nécessiter des capacités de traitement importantes, telles que les jeux vidéo.

Comme cela est bien connu, les serveurs 2 peuvent être configurés pour héberger une ou plusieurs machine(s) virtuelle(s) 3, en même temps que son/leur système d'exploitation et ses/leurs applications La virtualisation permet qu'une pluralité de machines virtuelles 3 soient hébergées dans chaque serveur 2 pour fournir une pluralité d'environnements virtuels totalement isolés les uns des autres. Chaque environnement virtuel a accès aux ressources matérielles du serveur (CPU, mémoire, moyens de stockage, carte graphique, ...) permettant d'y exécuter une session informatique d'utilisateur. On peut citer, parmi les technologies de virtualisation bien connues, Citrix XenServer, Microsoft Hyper-V, VMware ESXi, Oracle Virtual box, Quick Emulator sous licence ouverte GNU (QEMU), etc.

Chacune des machines virtuelles 3 dans l'ordinateur hôte 1 peut être dédiée à un utilisateur spécifique. Les utilisateurs interagissent avec leurs machines virtuelles 3 dédiées depuis des clients distants 4, 4', chacun étant connecté à l'ordinateur hôte 1 par l'intermédiaire d'un réseau comme Internet. Étant donné que la plus grande partie, si ce n'est l'intégralité, du traitement se fait au niveau de l'ordinateur hôte 1, les clients distants 4, 4' peuvent rester très simples, et peuvent inclure, par exemple, un simple terminal, un connecteur de réseau et des dispositifs d'entrée/sortie de base (clavier, souris...) comme représenté par le client distant 4 sur la figure 1. Le client distant 4 peut être formé d'un dispositif informatique simplifié, tel qu'une tablette, un Smartphone. Selon une autre solution, il peut s'agir d'un ordinateur personnel standard, disposant de sa propre unité centrale, d'une carte graphique, de périphériques, ... comme représenté par le client distant 4'.

Chaque serveur 2 de l'ordinateur hôte 1 héberge, de préférence, moins de dix machines virtuelles 3 pour fournir des ressources informatiques suffisantes, notamment matérielles, à chaque machine virtuelle 3 pour exécuter des applications hautes performances avec un niveau suffisant de service. Chaque machine virtuelle 3 est créée au moment de la connexion du client à l'ordinateur hôte 1 et comprend une unité centrale virtuelle, une mémoire principale virtuelle, ainsi que toutes les autres ressources nécessaires.

La machine virtuelle 3 comporte notamment, ou a accès à, une unité de traitement graphique pour préparer des données d'affichage de la session. Cette unité de traitement graphique peut correspondre à une simple carte vidéo matérielle ou à une carte graphique matérielle associée à la machine virtuelle 3. Il peut s'agir également d'une carte vidéo virtuelle ou d'une carte graphique virtuelle entièrement émulée par les ressources matérielles du serveur 2 (et notamment par son ou ses unité(s) de traitement et/ou sa ou ses carte(s) graphique(s), ces ressources étant mises à disposition de la machine virtuelle 3 par la couche logicielle de virtualisation (l'hyperviseur) s'exécutant sur le serveur 2. Cette unité de traitement graphique peut également mixer des éléments matériels et des éléments virtuels.

Quelle qu'en soit la nature, matérielle ou virtuelle, l'unité de traitement graphique associée à la machine virtuelle a pour fonction de préparer et fournir les données d'affichage de la session informatique s'exécutant dans la machine virtuelle 3.

La session informatique d'utilisateur s'exécute sur l'ordinateur hôte 1 et exploite les capacités de traitement d'une unité de traitement graphique qui prépare les données d'affichage de la session. Ces données d'affichage sont fournies répétitivement par l'unité de traitement graphique, dans une mémoire tampon de cette unité ou associée à cette unité. Les données d'affichage peuvent, par exemple, être préparées et fournies toutes les 4 à 35 millisecondes par l'unité de traitement graphique.

Chaque machine virtuelle 3 émule un ordinateur personnel virtuel hautes performances qui est associé et commandé par un client distant 4, 4'. Chaque machine virtuelle 3 constitue donc, ou est l'équivalent, d'une session d'utilisateur, et un grand nombre de ces sessions d'utilisateur peuvent être exécutées sur les serveurs 2 de l'ordinateur hôte 1. L'architecture informatique peut comprendre une pluralité d'ordinateurs hôtes 1, reliés entre eux et qui peuvent se trouver dans des centres de données informatiques géographiquement séparés.

Chaque session d'utilisateur est associée à un client distant 4, 4'. Pour afficher les images de la session d'utilisateur sur le terminal du client distant 4, 4' qui lui est associé, l'ordinateur hôte 1 approvisionne le client distant 4, 4' en informations d'affichage (y compris en sons) et en informations de commande pour les dispositifs d'entrée/sortie installés sur le site distant.

A l'inverse, les clients distants 4, 4' approvisionnent l'ordinateur hôte 1 en informations de commande en provenance des dispositifs d'entrée/sortie qui se trouvent sur le site distant (clavier, souris), et éventuellement d'autres formes de données telles que des informations d'affichage et sonores fournies par un dispositifs USB ou intégrées dans une caméra et un microphone du client distant 4, 4', ou des périphériques de réseau, au niveau du client distant 4, 4', tels des imprimantes...

On désignera dans la présente description par « informations de session » toutes les informations échangées entre le client distant 4, 4' et l'ordinateur hôte 1.

Du côté de l'ordinateur hôte 1, un programme de capture et de diffusion des informations de session s'exécute, en tâche de fond, dans chaque session informatique. Le programme de capture et de diffusion met en oeuvre des opérations visant à collecter les données d'affichage, de son et de commande préparées par la session informatique, d'encoder ces données pour limiter l'utilisation de la bande passante du réseau et de les transmettre au client distant 4, 4'. Le programme de capture et de diffusion reçoit et décode également les données de commande communiquées par le client distant 4, 4', les exploite ou les fournit à la session d'utilisateur pour qu'elles soient traitées et exploitées de manière conventionnelle.

Les clients distants 4, 4', de leur côté, sont munis des ressources matérielles et/ou logicielles appropriées pour décoder les informations communiquées par le programme de capture et de diffusion afin qu'elles soient exploitées du côté client. Ces ressources permettent également de préparer les données de commande générées par le client distant 4, 4' et de les transmettre à l'ordinateur hôte 1. Outre les données issues des dispositifs d'interface du client distant 4, 4' (clavier, souris, ...), les données de commande peuvent comprendre des informations additionnelles, telles que l'information de débit de données reçue de l'ordinateur hôte 1, permettant de caractériser la qualité de la liaison informatique avec cet ordinateur.

### État non fonctionnel d'une machine virtuelle

Il existe de multiples causes pouvant rendre une machine virtuelle non fonctionnelle.

L'état non fonctionnel de la machine virtuelle 3 peut correspondre à un dysfonctionnement de la machine au moment de son démarrage. Il peut ainsi s'agir d'un échec de démarrage du système d'exploitation. Un tel échec de démarrage peut être dû à l'installation d'un nouveau pilote de périphérique sur le serveur hébergeant la machine virtuelle, ou à une incapacité du système élémentaire d'entrée/sortie (BIOS, acronyme de la terminologie anglo-saxonne « Basic Input Output System ») de détecter le chargeur d'amorçage (« Boot loader » selon la terminologie anglo-saxonne fréquemment utilisée) permettant le lancement du système d'exploitation.

La machine virtuelle peut également être dysfonctionnelle parce qu'une mise à jour du système d'exploitation est en cours. Pendant tout le temps de cette mise à jour, une session informatique ne peut s'exécuter, les images de session ne peuvent être transmises au client 4, et l'utilisateur reste confronté à un « écran noir » dont il ne peut connaître la cause.

On peut également envisager d'autres états non fonctionnels susceptibles de survenir lors de son démarrage, tels que des défaillances matérielles du serveur 2 hébergeant la machine virtuelle.

Dans toutes ces situations, la session d'utilisateur ne peut s'exécuter, ni s'afficher sur l'écran du client distant 4, 4', ce qui complique la caractérisation du dysfonctionnement.

L'état non fonctionnel de la machine virtuelle 3 peut également correspondre à un dysfonctionnement de la machine virtuelle 3 au cours de l'exécution de la session d'utilisateur. Dans ces situations, la machine virtuelle 3 a pu démarrer, une session informatique d'utilisateur s'exécute sur la machine virtuelle 3, mais elle ne s'exécute pas correctement.

Ainsi, un échec de mise à jour du système d'exploitation peut entraîner la disparition tout ou partie des icônes de l'environnement de bureau. Il est également possible que toutes ces icônes s'affichent, mais que les couleurs affichées ne soient pas les bonnes. Il se peut également que le nom des applications ait changé. Il arrive également que la langue dans laquelle l'environnement de bureau communique avec l'utilisateur soit entièrement ou partiellement modifiée. Ces situations, pour lesquelles il peut encore être possible d'afficher la session sur l'écran du client distant 4, 4', entraînent toutefois des désagréments pour l'utilisateur qu'il serait souhaitable de pouvoir détecter et corriger aisément.

Un état non fonctionnel de la machine virtuelle peut parfois être identifié par la simple visualisation de l'image qui s'affiche sur l'écran du client distant ou qui s'afficherait sur un écran qui serait connecté à la machine virtuelle. Une telle image est désignée par l'expression « image d'écran représentative d'un état non fonctionnel » dans la présente demande. Dans certains cas, cette image permet même de déterminer l'origine du dysfonctionnement ou la commande de dépannage qui permettrait d'y remédier.

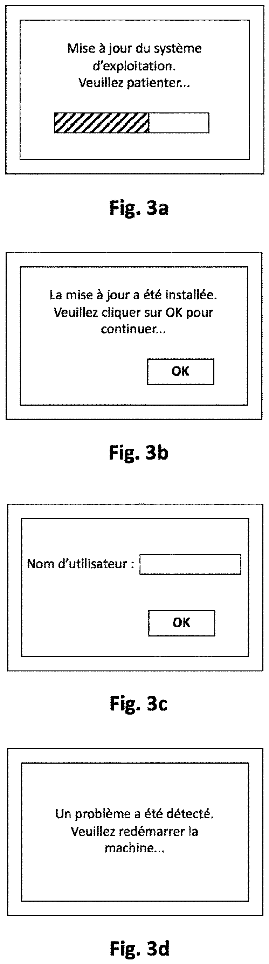

A titre d'exemple, on a reproduit sur les figures 3a à 3d, une pluralité de copies d'écran correspondant à des images d'écran représentatives d'un état non fonctionnel.

Sur la figure 3a est représentée schématiquement une copie d'écran correspondant à une mise à jour du système d'exploitation. Cet état est dysfonctionnel en ce qu'il empêche le lancement du système d'exploitation avant la fin de la mise à jour. Pour être corrigé, cet état nécessite simplement une temporisation jusqu'à la fin de la mise à jour.

La figure 3b représente de manière schématique une copie d'écran correspondant à la fin d'une mise à jour. Cet état est également dysfonctionnel en ce qu'il empêche le lancement du système d'exploitation tant qu'il n'a pas été cliqué sur le bouton OK. Pour être corrigé, cet état nécessite que le curseur soit déplacé sur le bouton OK et qu'un clic de souris soit effectué.

La figure 3c représente de manière schématique une copie d'écran correspondant à la fin d'une mise à jour requérant l'entrée d'un nom d'utilisateur et sa validation. Cet état empêche le lancement du système d'exploitation tant que les instructions n'ont pas été exécutées. Pour être corrigé, cet état nécessite qu'une chaîne de caractères soit instruite à l'emplacement désigné, que le curseur soit déplacé sur le bouton OK et qu'un clic de souris soit effectué.

La figure 3d représente de manière schématique une copie d'écran invitant l'utilisateur à redémarrer la machine suite à la détection d'une panne.

Bien entendu, ces situations sont présentées à titre d'exemples et ne sont aucunement limitatives de l'invention.

Les images d'écran représentatives d'un état non fonctionnel peuvent être collectées et mémorisées pour former une bibliothèque d'images ou de signatures de ces images (que l'on désignera génériquement par le terme « images » afin de simplifier la présente description). Cette bibliothèque peut être complétée par des images au fur et à mesure que des nouvelles situations dysfonctionnelles sont détectées.

Chaque image de la bibliothèque peut être associée à une situation de dysfonctionnement particulière, et éventuellement à une commande de dépannage permettant de résoudre ou de tenter de résoudre ce dysfonctionnement. A titre d'exemple, l'image de la figure 3b est représentative d'une situation de blocage dans laquelle la machine virtuelle reste en attente d'une validation de l'utilisateur, et le remède consiste à cliquer un bouton « OK » affiché à l'écran. La commande de dépannage permettant de résoudre le dysfonctionnement dans ce cas pourra correspondre à un déplacement du curseur aux coordonnées correspondant à l'emplacement du bouton « OK » et à un clic de souris. Les commandes de dépannage peuvent être préparées après analyse de l'image et mémorisées dans la bibliothèque, en les associant respectivement aux images auxquelles elles s'appliquent.

### Procédé de maintenance

La présente invention cherche à tirer profit de l'environnement informatique qui vient d'être décrit pour proposer un procédé de maintenance d'une machine virtuelle 3 qui permette à l'ordinateur hôte 1 de détecter et résoudre certains dysfonctionnements de la machine virtuelle 3. Sans que cette caractéristique ne forme une limitation quelconque de l'invention, ce procédé peut être mise en oeuvre par un programme de maintenance s'exécutant sur un serveur de maintenance de l'ordinateur hôte 1 distinct du serveur hébergeant la machine virtuelle 3. De cette manière, la maintenance de la machine virtuelle 3 est effectuée au moyen de ressources distinctes de la machine susceptible d'être dysfonctionnelle, ce qui garantit sa bonne exécution.

La figure 2 représente de manière schématique les étapes du procédé de maintenance conforme à la présente description.

Le procédé de maintenance comprend une étape S1 d'obtention d'au moins une image de session préparée par l'unité de traitement graphique d'une machine virtuelle 3 hébergé dans l'ordinateur hôte. La machine virtuelle 3 qui fait l'objet du procédé de maintenance a pu être désigné par un agent de maintenance, par l'utilisateur de cette machine lui-même, voire même choisie aléatoirement, dans le cadre d'une campagne de maintenance préventive. L'image de session capturée correspond aux données d'affichage qui sont mémorisées dans une mémoire tampon de l'unité de traitement graphique de la machine virtuelle.

Ces données d'affichages constituant l'image de session peuvent être requises par le programme de maintenance auprès de l'hyperviseur du serveur 2 hébergeant la machine virtuelle 3. L'hyperviseur peut procéder à la lecture de l'emplacement mémoire dans lequel résident ces données pour les retourner au programme de maintenance.

Lorsque la session d'utilisateur s'exécute, l'unité de traitement graphique peut avantageusement comprendre une carte graphique virtuelle et une carte graphique physique. Cette configuration permet à la session d'utilisateur d'utiliser les performances de la carte graphique physique tout en permettant au programme de maintenance de requérir les données d'affichage constituant l'image de session auprès de l'hyperviseur du serveur 2 hébergeant la machine virtuelle 3.

Quel que soit le mode d'obtention de l'image de session, le procédé de maintenance comprend ensuite une étape S2 de comparaison de l'image de session capturée avec les images d'écran représentatives d'un état non fonctionnel de la machine virtuelle. Plus spécifiquement, au cours de cette étape, on compare l'image de session capturée avec les images de la bibliothèque. On cherche en général à déterminer dans quelle mesure l'image capturée correspond effectivement à une image de la bibliothèque, sans nécessiter qu'elle coïncide « pixel à pixel ». On applique des métriques d'images et considérer que deux images correspondent si la distance les séparant est inférieure à un seuil déterminé. On peut également traiter numériquement les images pour en extraire des signatures, et faire porter la comparaison sur ces signatures.

La comparaison peut alternativement se faire par une méthode de vision par ordinateur appelée détection de zones d'intérêt (communément désignée sous sa dénomination anglo-saxonne « feature détection »). Cette méthode consiste à détecter des zones d'une image présentant des propriétés locales remarquables pour en calculer des caractéristiques, puis extraire ces caractéristiques. Par exemple, il existe des motifs invariants, reconnaissables et catégorisés, caractéristiques d'une image d'écran représentative d'un état non fonctionnel de la machine virtuelle. Des algorithmes connus utilisent cette méthode, tels que l'algorithme SIFT (acronyme de la terminologie anglo-saxonne « scale-invariant feature transform », que l'on peut traduire par transformation de caractéristiques visuelles invariante à l'échelle) ou l'algorithme SURF (acronyme de l'expression anglo-saxonne « Speeded Up Robust Features », que l'on peut traduire par caractéristiques robustes accélérées).

De manière avantageuse, cette étape de comparaison peut être mise en oeuvre par un module de classification configuré par apprentissage automatique. Ce module de classification peut par exemple être un réseau de neurones. Préférentiellement, ce réseau de neurones peut comporter un réseau de neurones convolutionnel.

A l'issue de cette étape on dispose du résultat de la comparaison, qui peut être soit une correspondance de l'image de session capturée avec l'une des images de la bibliothèque, soit l'absence d'une telle correspondance.

Le procédé de maintenance comprend ensuite une étape de détermination S3 de l'état de fonctionnement de la machine virtuelle selon le résultat de l'étape de comparaison. Si le résultat de l'étape de comparaison est négatif, c'est-à-dire si l'image de session ne correspond à aucune image de la bibliothèque, la machine virtuelle est considérée comme fonctionnelle. Dans le cas contraire, la machine virtuelle est considérée comme non fonctionnelle.

L'étape de détermination peut comprendre une distinction binaire entre un état fonctionnel et un état non fonctionnel, sans distinction de la nature du dysfonctionnement. En cas de dysfonctionnement, le programme de maintenance peut prévoir l'envoi d'un message d'alerte aux agents de maintenance pour leur permettre de prendre connaissance de l'existence d'un dysfonctionnement et le corriger si possible.

Toutefois, de manière préférentielle, l'étape de détermination peut comprendre une distinction plus fine suivant la nature des états non fonctionnels. Un tel mode de réalisation est illustré sur la figure 2, qui représente un état fonctionnel référencé « OK » et n état non fonctionnels référencés NOK1 à NOKn. Ces différents états non fonctionnels peuvent correspondre aux différents exemples d'états non fonctionnels décrits précédemment, et correspondent chacun à une image représentative d'un état non fonctionnel. Comme on le voit sur la figure 2, cette distinction offre la possibilité de proposer des traitements de réparation S4 adaptés à chaque type de dysfonctionnement.

L'étape S3 de détermination comprend alors également la préparation de la commande de dépannage associée, dans la bibliothèque, à l'image représentative de l'état non fonctionnel qui correspond à l'image de session capturée. Cette étape est suivie d'une étape S4 de réparation, qui comprend l'application de la commande de dépannage à la machine virtuelle 3.

Ainsi, comme cela est représenté sur la figure 2, si la machine virtuelle 3 est considérée comme étant dans un état fonctionnel (OK) au cours de l'étape S3 de détermination, aucune commande de dépannage n'est préparée, et l'étape S4 de réparation n'est pas effectuée. Dans cette situation, le programme de maintenance peut s'arrêter (STOP).

De même que l'étape de comparaison, l'étape de détermination peut être mise en oeuvre par un module de classification configuré par apprentissage automatique, tel qu'un réseau de neurones comportant préférentiellement un réseau de neurones convolutionnel.

L'état non fonctionnel référencé NOK1 peut conduire à préparer une commande de dépannage correspondant à une simple temporisation, l'étape de réparation S4 consistant simplement à mettre en oeuvre cette temporisation. Par exemple, un tel état peut correspondre à une mise à jour du système d'exploitation, illustrée à la figure 3a, qui nécessite uniquement un temps d'attente avant de pouvoir lancer le système d'exploitation, sans qu'aucune instruction ne soit nécessaire.

L'état non fonctionnel peut également correspondre à une situation qui nécessiterait de la part de l'utilisateur la transmission d'une instruction au moyen des dispositifs d'interface (souris, clavier...) à sa disposition.

Ainsi, la commande de dépannage associée à un état non fonctionnel référencé NOK2 peut être un clic de souris sur une zone prédéterminée de l'écran. Par exemple, l'état non fonctionnel peut correspondre à la présence d'une fenêtre d'information ou d'erreur nécessitant un ou plusieurs clics, par exemple au niveau d'une case « OK », comme illustré à la figure 3b, pour permettre l'exécution de la session informatique. C'est le cas notamment à la fin d'une mise à jour, où un message indiquant simplement la fin de la mise à jour ou proposant le redémarrage de la machine virtuelle 3 peut s'afficher. Une telle commande de dépannage peut être appliqué à la machine virtuelle 3 par le programme de maintenance au moyen de l'hyperviseur, en instruisant le déplaçant du curseur aux coordonnées correspondant à l'emplacement du bouton « OK » et en émulant un clic de souris. Les coordonnées de positionnement du curseur et l'instruction de clic forment alors la commande de dépannage mémorisé dans la bibliothèque d'images, et associé dans cette bibliothèque à l'image représentée sur la figure 3b.

De même, la commande de dépannage associée à un état non fonctionnel référencé NOK3 peut être l'entrée d'une chaîne de caractères. Par exemple, l'état non fonctionnel peut correspondre à la présence d'une fenêtre d'information ou d'erreur nécessitant l'entrée d'une chaîne de caractères. C'est le cas notamment à la fin d'une mise à jour, où un message requérant l'instruction d'un mot de passe ou d'informations particulières peut s'afficher, comme illustré à la figure 3c. Une telle commande de dépannage peut être appliquée par le programme de maintenance au moyen de l'hyperviseur, émulant les fonctions d'un clavier de la machine virtuelle 3 en maintenance.

Une autre commande de dépannage, correspondant à un autre état non fonctionnel, peut être une instruction de redémarrage de la machine virtuelle 3. Une telle commande de dépannage peut être prévue en cas de survenance d'un arrêt inattendu du système d'exploitation consécutif, par exemple à un bogue, une erreur de manipulation, un virus informatique, une panne informatique, une surchauffe du serveur 2 ou un dépassement des capacités de la machine virtuelle 3 sur laquelle s'exécute le système d'exploitation. Une telle situation est illustrée par l'image d'écran de la figure 3d.

A l'issue de l'étape S4 de réparation, le programme de maintenance s'arrête (STOP).

Alternativement, le programme peut revenir à l'étape S1 d'obtention d'une image de session afin de procéder à une nouvelle caractérisation de l'état de fonctionnement de la même machine virtuelle. L'ensemble des étapes déjà décrites peuvent être alors réitérées jusqu'à ce que la machine virtuelle se trouve dans un état fonctionnel (OK), ou réitéré un certain nombre de fois avant d'alerter un agent de maintenance si un état fonctionnel ne peut être retrouvé.

Les étapes du procédé de maintenance décrites tout au long de la présente description peuvent être réalisées à chaque démarrage de chaque machine virtuelle 3 de l'ordinateur hôte 1, de manière automatique. Ce mode de réalisation permet une détection systématique des dysfonctionnements susceptibles de survenir au moment du lancement de la machine virtuelle 3.

Alternativement, pour alléger la charge de calcul que peut imposer une exécution systématique du programme de maintenance, les étapes peuvent être réalisées sur demande de l'utilisateur ou d'un agent de maintenance. Ce dernier, constatant un problème au moment du lancement de sa session informatique ou en cours d'exécution de celle-ci, peut envoyer un message d'alerte transmis à l'ordinateur hôte 1, qui déclenche alors les étapes présentées. Le déclenchement de ces étapes peut être fait soit automatiquement à réception du message d'alerte envoyé par l'utilisateur, soit sur demande des agents de maintenance après traitement du message d'alerte.

Le programme de maintenance peut être exécuté de manière régulière et systématique pour chaque machine virtuelle 3 hébergées par l'ordinateur hôte ou aléatoirement dans le temps et parmi toutes les machines virtuelles hébergés. Pour le dire autrement, le procédé de maintenance conforme à la présente description peut être déclenché à intervalles de temps réguliers sur une machine virtuelle, ou bien de manière aléatoire parmi les machines virtuelles hébergées par les serveurs de l'ordinateur hôte 1. Ce mode de mise en oeuvre, fondé sur des probabilités, permet une maintenance plus ou moins rapprochée suivant les critères de déclenchement de l'ensemble des machines virtuelles. Il permet en même temps de pouvoir prévoir, par la fixation des critères de déclenchement, les charges de calcul nécessités pour exécuter la maintenance sur l'ensemble des machines virtuelles.

Quel que soit le mode d'exécution mis en oeuvre, en procédant à une analyse automatisée d'une image capturée de session, un programme de maintenance conforme à la présente description permet bien de détecter, voire même de résoudre, certains dysfonctionnements susceptibles de survenir lors du démarrage de la machine virtuelle 3 ou au cours de l'exécution de la session informatique sur cette machine 3, sans nécessiter d'intervention humaine.

Bien entendu l'invention n'est pas limitée au mode de mise en oeuvre décrit et on peut y apporter des variantes de réalisation sans sortir du cadre de l'invention tel que défini par les revendications.

Il est notamment possible que le procédé de maintenance soit mis en oeuvre au niveau du serveur 2 hébergeant la machine virtuelle 3 sur laquelle s'exécute la session informatique d'utilisateur. Le procédé de maintenance peut même être mis en oeuvre au niveau de la machine virtuelle 3 elle-même.

L'invention n'est pas non plus limitée aux exemples d'états de fonctionnement évoqués dans la présente description. D'autres états non fonctionnels, tels que des données corrompues ou manquantes, des tables de partition de disques durs corrompues, peuvent être envisagés dans la mesure où ces états non fonctionnels conduisent à une image de session bien identifiable.

La commande de dépannage peut comprendre une combinaison des commandes évoquées. Par exemple, dans la situation illustrée en figure 3c nécessitant l'entrée d'une chaîne de caractères, la commande de dépannage peut comprendre un déplacement du curseur aux coordonnées du champ de saisie de texte, puis un clic de souris, avant d'entrer la chaîne de caractères, de déplacer du curseur aux coordonnées du bouton « OK », puis d'appliquer un clic de souris.

De même, d'autres commandes de dépannage que celles présentées dans la présente description peuvent être envisagées. En particulier, bien que la plupart des commandes décrites soient une émulation de commandes réalisées par l'utilisateur (comme un déplacement de la souris, un clic de souris, une chaîne de caractères), on peut prévoir une commande de dépannage constituée d'une ou plusieurs commandes systèmes.

De la même façon, lorsque le dysfonctionnement de la machine virtuelle 3 ne peut être réparé sans porter atteinte à l'intégrité des données, une remise à zéro de la machine virtuelle 3 peut être effectuée. Cette remise à zéro, qui entraîne la perte de toutes les données enregistrées par l'utilisateur sur la machine virtuelle 3, permet souvent de résoudre les dysfonctionnements les plus difficiles à traiter. Cette remise à zéro est souvent nécessaire lorsque certaines données, particulièrement sensibles, sont corrompues.

Afin de limiter le préjudice causé à l'utilisateur, une sauvegarde des données sur un serveur de sauvegarde est parfois envisageable. Cette étape est souvent préalable à une remise à zéro de la machine virtuelle 3.

L'invention n'est pas non plus limitée à des images représentatives d'un état non fonctionnel constituée d'une image unique. Une image représentative d'un état non fonctionnel peut être constituée d'une pluralité d'images. Dans ce cas, si le résultat de l'étape de comparaison est une correspondance de l'image de session avec une image de la pluralité d'images, il est possible de réitérer cette étape de comparaison avec les (1') image(s) de session précédente(s) et/ou suivante(s). Dans cette situation, seule la correspondance de la succession d'images de session avec la pluralité d'images conduit à caractériser l'état non fonctionnel à l'issue de l'étape de détermination.

Cela peut être le cas lorsque le dysfonctionnement n'est pas caractérisé par une seule image, mais par une succession d'images. C'est le cas par exemple d'un écran noir, qui n'est pas caractéristique à lui seul d'un dysfonctionnement. En revanche, une succession répétée d'écrans entièrement noirs et entièrement blancs peut traduire un dysfonctionnement de la machine virtuelle 3. C'est alors non pas l'image mais le déroulé qui traduit le dysfonctionnement.

L'invention n'est pas non plus limitée à un contenu statique de la bibliothèque d'images. En effet, l'utilisateur peut constater un état non fonctionnel de la machine virtuelle non prévu dans le programme de maintenance. Autrement dit, l'image de session correspondant à cet état non fonctionnel ne fait pas partie des images représentatives d'un état non fonctionnel de la machine virtuelle de la bibliothèque d'images. Il peut alors émettre un signal d'alerte, qui peut conduire le programme de maintenance à effectuer une capture d'écran de la session d'utilisateur et aouter cette image de session capturée aux images de la bibliothèque d'images. Pour le dire autrement, un procédé de maintenance conforme à la présente description peut comporter une étape de réception par l'ordinateur hôte 1 d'un signal d'alerte émis par le client distant 4, 4', une étape de préparation par l'unité de traitement graphique d'une image de session, et une étape d'ajout de l'image de session aux images représentatives d'un état non fonctionnel de la machine virtuelle à la bibliothèque d'images.

De la même façon, le signal d'alerte peut être émis non pas par l'utilisateur du client distant 4, 4' mais par l'ordinateur hôte lui-même. C'est le cas par exemple lorsque la routine en charge de l'exécution de la session d'utilisateur ne parvient pas à exécuter la session d'utilisateur sur la machine virtuelle, sans que l'image de session correspondante ne soit une image représentative d'un état non fonctionnel de la machine virtuelle présente dans la bibliothèque d'images. Dans ce cas, les mêmes étapes peuvent être mises en oeuvre par le programme de maintenance.

## Revendications

1. Procédé de maintenance d'une machine virtuelle (3) hébergée sur un serveur (2) d'un ordinateur hôte (1), le procédé étant implémenté sur l'ordinateur hôte, la machine virtuelle (3) comprenant une unité de traitement graphique pour préparer des images de session destinées à s'afficher sur un écran d'un client distant, les images de session étant produites par la machine virtuelle, le procédé de maintenance étant **caractérisé en ce qu'**il comporte les étapes suivantes :
- l'obtention (S1) d'au moins une image de session capturant des données d'affichage qui sont mémorisées dans une mémoire tampon de l'unité de traitement graphique de la machine virtuelle;
- la comparaison (S2) de l'image de session capturée avec au moins une image d'écran représentative d'un état non fonctionnel de la machine virtuelle (3), la comparaison appliquant des métriques d'images et considérant que deux images correspondent si la distance les séparant est inférieure à un seuil déterminé ;
- la détermination (S3) de l'état de fonctionnement de la machine virtuelle selon le résultat de l'étape précédente de comparaison.

2. Procédé de maintenance selon la revendication précédente dans lequel l'unité de traitement graphique comprend une carte graphique virtuelle.

3. Procédé de maintenance selon l'une des revendications précédentes dans lequel un état non fonctionnel de la machine virtuelle (3) est un échec de démarrage d'un système d'exploitation de la machine virtuelle (3).

4. Procédé de maintenance selon l'une des revendications précédentes dans lequel un état non fonctionnel de la machine virtuelle (3) est une mise à jour du système d'exploitation de la machine virtuelle (3).

5. Procédé de maintenance selon l'une des revendications précédentes dans lequel un état non fonctionnel de la machine virtuelle (3) est un échec de mise à jour du système d'exploitation de la machine virtuelle (3).

6. Procédé de maintenance selon l'une des revendications précédentes dans lequel l'étape de comparaison (S2) consiste à détecter la présence d'au moins un motif caractéristique prédéterminé de l'image d'écran dans l'image de session.

7. Procédé de maintenance selon l'une des revendications précédentes dans lequel les étapes de comparaison (S2) et de détermination (S3) sont mises en œuvre par un module de classification configuré par apprentissage automatique.

8. Procédé de maintenance selon l'une des revendications précédentes dans lequel l'étape de détermination (S3) comprend également la préparation d'une commande de dépannage de la machine virtuelle (3).

9. Procédé de maintenance selon la revendication précédente comprenant une étape de réparation (S4) comprenant l'envoi de la commande de dépannage à la machine virtuelle (3).

10. Procédé de maintenance selon la revendication précédente dans lequel la commande de dépannage est un clic de souris sur une zone prédéterminée de l'écran, une chaîne de caractères, une instruction de redémarrage de la machine virtuelle (3).

11. Programme d'ordinateur contenant des instructions aptes à la mise en œuvre des étapes du procédé de maintenance selon l'une des revendications précédentes lorsque le procédé est exécuté sur une machine virtuelle de maintenance ou un serveur de maintenance de l'ordinateur hôte (1).

## Patentansprüche

1. Verfahren zum Warten einer virtuellen Maschine (3) auf einem Server (2) eines Host-Computers (1), wobei das Verfahren auf dem Host-Computer implementiert ist, wobei die virtuelle Maschine (3) eine Grafikverarbeitungseinheit zum Erstellen von Sitzungsbildern umfasst, die dazu bestimmt sind, auf einem Bildschirm eines entfernten Clients angezeigt zu werden, wobei die Sitzungsbilder von der virtuellen Maschine erzeugt werden, wobei das Wartungsverfahren **dadurch gekennzeichnet ist, dass** es die folgenden Schritte umfasst:
- Erhalten (S1) mindestens eines Sitzungsbildes, das Anzeigedaten erfasst, die in einem Puffer der Grafikverarbeitungseinheit der virtuellen Maschine gespeichert sind;
- Vergleichen (S2) des erfassten Sitzungsbildes mit mindestens einem Bildschirmbild, das repräsentativ für einen nichtfunktionalen Zustand der virtuellen Maschine (3) ist, wobei der Vergleich Bildmetriken anwendet und berücksichtigt, dass zwei Bilder korrespondieren, wenn der Abstand zwischen ihnen kleiner als ein bestimmter Schwellenwert ist;
- Bestimmen (S3) des Betriebszustands der virtuellen Maschine gemäß dem Ergebnis des vorherigen Vergleichsschritts.

2. Wartungsverfahren nach einem der vorhergehenden Ansprüche, wobei die Grafikverarbeitungseinheit eine virtuelle Grafikkarte umfasst.

3. Wartungsverfahren nach einem der vorhergehenden Ansprüche, wobei ein nicht-funktionaler Zustand der virtuellen Maschine (3) ein Fehlstart eines Betriebssystems der virtuellen Maschine (3) ist.

4. Wartungsverfahren nach einem der vorhergehenden Ansprüche, wobei ein nicht-funktionaler Zustand der virtuellen Maschine (3) eine Aktualisierung des Betriebssystems der virtuellen Maschine (3) ist.

5. Wartungsverfahren nach einem der vorhergehenden Ansprüche, wobei ein nicht-funktionaler Zustand der virtuellen Maschine (3) ein Misserfolg bei der Aktualiserung eines Betriebssystems der virtuellen Maschine (3) ist.

6. Wartungsverfahren nach einem der vorhergehenden Ansprüche, wobei der Vergleichsschritt (S2) aus dem Erfassen des Vorhandenseins mindestens eines vorbestimmten charakteristischen Musters des Bildschirmbildes in dem Sitzungsbild besteht.

7. Wartungsverfahren nach einem der vorhergehenden Ansprüche, wobei die Schritte des Vergleichens (S2) und des Bestimmens (S3) durch ein durch automatisches Lernen konfiguriertes Klassifizierungsmodul implementiert werden.

8. Wartungsverfahren nach einem der vorhergehenden Ansprüche, wobei der Bestimmungsschritt (S3) auch das Erstellen eines Fehlerbehebungsbefehls für die virtuelle Maschine (3) umfasst.

9. Wartungsverfahren nach dem vorhergehenden Anspruch, umfassend einen Reparaturschritt (S4), umfassend Senden des Fehlerbehebungsbefehls an die virtuelle Maschine (3).

10. Wartungsverfahren nach dem vorhergehenden Anspruch, wobei der Fehlerbehebungsbefehl ein Mausklick auf einen vorbestimmten Bereich des Bildschirms, eine Zeichenfolge, eine Anweisung zum Neustart der virtuellen Maschine (3) ist.

11. Computerprogramm, das Anweisungen enthält, die geeignet sind, die Schritte des Wartungsverfahrens nach einem der vorhergehenden Ansprüche zu implementieren, wenn das Verfahren auf einer virtuellen Wartungsmaschine oder einem Wartungsserver des Host-Computers (1) ausgeführt wird.

## Claims

1. Method for maintaining a virtual machine (3) hosted on a server (2) of a host computer (1), the method being implemented on the host computer, the virtual machine (3) comprising a graphics processing unit to prepare session images intended to be displayed on a screen of a remote client, the session images being produced by the virtual machine, the maintenance method being **characterized in that** it comprises the following steps:
- obtaining (S1) at least one session image capturing display data which is stored in a buffer of the graphics processing unit of the virtual machine;
- comparing (S2) the captured session image with at least one screen image representative of a non-functional state of the virtual machine (3), the comparison applying image metrics and considering that two images correspond if the distance separating them is less than a determined threshold;
- determining (S3) the operating state of the virtual machine according to the result of the previous comparison step.

2. Maintenance method according to the preceding claim wherein the graphics processing unit comprises a virtual graphics card.

3. Maintenance method according to one of the preceding claims wherein a non-functional state of the virtual machine (3) is a failure to start an operating system of the virtual machine (3) .

4. Maintenance method according to one of the preceding claims wherein a non-functional state of the virtual machine (3) is an update of the operating system of the virtual machine (3).

5. Maintenance method according to one of the preceding claims wherein a non-functional state of the virtual machine (3) is a failure to update the operating system of the virtual machine (3).

6. Maintenance method according to one of the preceding claims wherein the comparison step (S2) consists of detecting the presence of at least one predetermined characteristic pattern of the screen image in the session image.

7. Maintenance method according to one of the preceding claims wherein the comparison (S2) and determination (S3) steps are implemented by a classification module configured by automatic learning.

8. Maintenance method according to one of the preceding claims wherein the determination step (S3) also comprises the preparation of a troubleshooting command for the virtual machine (3) .

9. Maintenance method according to the preceding claim comprising a repair step (S4) comprising sending the troubleshooting command to the virtual machine (3).

10. Maintenance method according to the preceding claim wherein the troubleshooting command is a mouse click on a predetermined area of the screen, a character string, an instruction to restart the virtual machine (3).

11. Computer program containing instructions suitable for implementing the steps of the maintenance method according to one of the preceding claims when the method is executed on a virtual maintenance machine or a maintenance server of the host computer (1).
